# EUROPÄISCHE PATENTSCHRIFT

(11) **EP 1 308 502 B1**
(45) Veröffentlichungstag und Bekanntmachung des Hinweises auf die Patenterteilung: **31.08.2005**
(21) Anmeldenummer: 02024502.3
(22) Anmeldetag: 30.10.2002
(51) Int. Cl.: C12F 3/02

(54) **Verfahren zur Verflüssigung von CO2 aus der alkoholischen Gärung oder anderen Gasquellen**
Method for the liquefaction of CO2 from fermentation of alcohol or from other gas sources
Procédé de liquéfaction du CO2 issu de la fermentation alcoolique ou d'autres sources de gaz

(30) Priorität: 30.10.2001 DE 10153059; 21.01.2002 DE 10202244
(43) Veröffentlichungstag der Anmeldung: 07.05.2003
(73) Patentinhaber: Anton Steinecker Maschinenfabrik GmbH, 85356 Freising-Attaching (DE)
(72) Erfinder: Bender, Harald, 85354 Freising (DE); Selmer, Kai, 24939 Flensburg (DE); Stichtenoth, Jan, 85354 Freising (DE); Grosser, Angelika, 84547 Emmerting (DE); Meyer-Pittroff, Roland, 85354 Freising (DE)
(74) Vertreter: Grünecker, Kinkeldey, Stockmair & Schwanhäusser Anwaltssozietät

(56) Entgegenhaltungen:
- EP-A- 0 646 756
- DE-A- 19 755 213
- US-A- 4 112 829
- US-A- 4 699 642
- US-A- 5 425 929

## Beschreibung

Bei Gärvorgängen in Brauereien entsteht Gärungskohlendioxid. Auch bei anderen Fermentationsprozessen, chemischen Prozessen und Energieumwandelprozessen entsteht CO₂. Des Weiteren kann CO₂ aus natürlichen Quellen gewonnen werden. In Brauereien und Getränkeabfüllanlagen kommt CO₂ für verschiedene Anwendungen, vor allem als Schutzgas und als Zusatzstoff zur Anwendung.

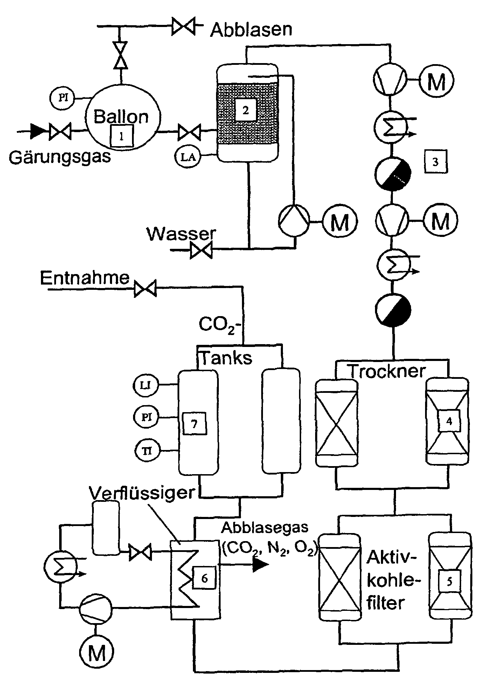

Es ist Stand der Technik, das Gärungskohlendioxid zurückzugewinnen, um es in der Brauerei, aber auch bei anderen Prozessen, wie beispielsweise der Getränkeabfüllung zu verwenden. Die interne Rückgewinnung von CO₂ spart Kosten, da alternativ CO₂ von ausreichender Reinheit aus anderen Quellen zugekauft werden müsste. Zudem ist bekannt, dass die Freisetzung von CO₂ einen negativen Einfluss auf die Klimaentwicklung der Erdatmosphäre hat, so dass eine Verringerung des CO₂ Ausstoßes auch aus ökologischen Gründen vorteilhaft ist. Es ist bekannt, dass der Gasstrom aus den Gärprozessen in Brauereien neben CO₂ weitere Gase, insbesondere O₂ und Inertgase (wie z. B. N₂) enthält. Im Folgenden werden diese von CO₂ verschiedenen Gase als Fremdgase bezeichnet. Zudem kann der Gasstrom mit weiteren leicht flüchtigen Begleitstoffen verunreinigt sein, welche durch Aktivkohle absorbiert werden können, mit Wasserdampf und Aerosolen. Stand der Technik sind CO₂-Rückgewinnungsanlagen in unterschiedlichsten Ausführungen, bei denen CO₂ aus dem Gasstrom (im Folgenden Produkt-CO₂ genannt) gewonnen wird. In der Figur ist schematisch eine CO₂-Rückgewinnungsanlage dargestellt anhand derer ein Verfahren nach dem Stand der Technik erläutert wird. Dem Ballon 1 kommt eine Pufferfunktion bezüglich des durch 3 angesaugten Gasstroms zu. Im Gaswascher 2 werden wasserlösliche Komponenten aus dem CO₂-haltigen Gasstrom entfemt. Anschließend wird das Gasgemisch mit Hilfe von zwei- bis dreistufigen Verdichtern 3 auf den Systemdruck oder Verflüssigungsdruck zwischen 16 bis 20 bar komprimiert. Im Anschluss an den Verdichtungsprozess wird das CO₂ über einen Trockner 4 geführt. Hier wird dem Gasstrom der mitgeführte Wasserdampf entzogen, um Eisbildung bei der Verflüssigung zu vermeiden. In den nachgeschalteten Aktivkohlefilter wird der CO₂-haltige Gasstrom von den verbliebenen Verunreinigungen (z. B. Ethanol, H₂S) weitgehend gereinigt. Die im CO₂-haltigen Gasstrom mitgeführten Fremdgase passieren den Aktivkohlefilter. Im Verflüssiger 6 wird das CO₂ kondensiert, um ein möglichst geringes Lagervolumen zu erreichen. Der CO₂ Verflüssiger 6 ist ein Wärmetauscher, aus dem die bei der Verflüssigung des CO₂ freiwerdende Kondensationswärme durch ein Kältemittel oder Kälteträger abgeführt wird. Das Produkt- CO₂ wird bei Systemdruck kondensiert. Gleichzeitig werden während der CO₂-Verflüssigung die Fremdgase, also vor allem O₂ und N₂ weitgehend abgetrennt, da sie unter den Systembedingungen nicht kondensieren. Dabei werden die Systembedingungen so gewählt, dass möglichst viel CO₂ kondensiert und möglichst wenig Fremdgase in dem flüssigen CO₂ enthalten sind. Nach der Verflüssigung wird das CO₂ in isolierten Lagertanks 7 gestapelt und bei Bedarf in ein Leitungsnetz eingespeist. Die nicht kondensierten Fremdgase werden mit einem Anteil an CO₂ aus dem Verflüssiger 6 abgeblasen. Die Reihenfolge der Systemkomponenten kann variieren. Entscheidend für die Kondensationstemperatur des CO₂ ist ausschließlich der Partialdruck des CO₂. Dies bedeutet, dass der zur Verflüssigung notwendige CO₂-Partialdruck im Verflüssiger 6 durch die Verdichter 3 und durch das Abblasen der Fremdgase aus dem Verflüssiger 6 eingehalten werden muss. Ein höherer Anteil nicht kondensierbarer Gase im Verflüssiger 6 bedeutet also bei konstanter Kondensationstemperatur, dass ein höherer Systemdruck/ Verdichtungsenddruck im Verflüssiger 6 notwendig ist bzw. bei gleichbleibendem Systemdruck, dass eine tiefere Kondensationstemperatur gewählt werden muss, um das CO₂ zu kondensieren.

Mit dem bisher meist eingesetzten Kältemittel NH₃ wird die Verflüssigung bei -20° C bis - 30° C und den entsprechenden Kondensationsdrücken, also um 15 bis 20 bar durchgeführt. Dies führt bei der Verflüssigung von CO₂ aus einem Gasgemisch mit einem hohen Fremdgasanteil zu einer geringen Ausbeute an CO₂. Mit NH₃ als Kältemittel ist es auch unter idealen Bedingungen (16 bar, -30° C) nicht möglich, den Anteil CO₂ im abgeblasenen Gas auf weniger als 79,5% zu reduzieren. Dies bedeutet gleichzeitig auch einen Energieverlust, weil auch das nicht-kondensierte CO₂, das dann abgeblasen wird, zuvor verdichtet und gereinigt wurde.

Eine Verflüssigung von CO₂ mit einem hohen Fremdgasanteil ist bei tieferen Temperaturen mit NH₃ als Kältemittel unwirtschaftlich. Das Kältemittel NH₃ wird bei tieferen Verdampfungstemperaturen im Unterdruck geführt, was bedeutet, dass das Kältemittel anfällig ist gegen Verunreinigungen durch Wasserdampf und Gas aus der Umgebungsluft. Dadurch sind technische Vorrichtungen zur Entlüftung des Kältemittelkreislaufs notwendig. Zudem ist es auf Grund des hohen spezifischen Volumens von NH₃ bei geringen Verdampfungstemperaturen erforderlich, die Kältemittelverdichter an den daraus resultierenden hohen Kältemittel-Saugvolumenstrom anzupassen, was mit erheblichen Kosten beim Anlagenbau verbunden ist. Eine Erhöhung des Systemdruckes (Produktseite) ist technisch anspruchsvoll, da die Druckbehälterverordnung und ergänzende technische Richtlinien mit steigenden Betriebsdrücken (hier über 20 bar) höhere Qualitäten für z. B. Schweißnähte und Behälter vorschreiben. EP0 646 756 offenbart die Verflüssigung von CO₂ unter Verwendung von CO₂ als kältemittel.

Aus DE 197 40 035 ist bekannt, dass der Anteil CO₂ in dem Gasstrom zu Beginn des Gärprozesses sehr gering ist und somit die Rückgewinnung von CO₂ nach dem Stand der Technik zu Beginn des Gärprozesses relativ ineffektiv ist. Es wird in DE 197 40 035 daher vorgeschlagen, das während des Gärprozesses im Gärtank entstehende Gasgemisch bis zur Erreichung eines bestimmten Anteils an CO₂ in die Umgebungsatmosphäre abzuleiten. Dies ist aus den oben genannten ökologischen Gründen unerwünscht. Ausserdem gehen dadurch, wie oben erwähnt, maßgebliche Mengen CO₂ der Rückgewinnung verloren.

Es ist Aufgabe der Erfindung, ein Verfahren anzugeben, das eine Verflüssigung von CO₂ auch bei Gasgemischen mit einem geringeren Volumenanteil an CO₂ unter wirtschaftlichen Gesichtspunkten ermöglicht und durch Reduktion des Volumenanteils von CO₂ im abgeblasenen Fremdgas eine Erhöhung der Ausbeute an zurückgewonnenem CO₂ im Vergleich zu aus dem Stand der Technik bekannten Verfahren erreicht.

Zur Lösung dieser Aufgabe wird CO₂ als Kältemittel im Verflüssiger eingesetzt. Im Temperaturbereich zwischen -35°C und -55°C, bevorzugt -50°C, zeichnet sich CO₂ durch einen vergleichsweise hohen COP (coefficient of performance) und eine hohe volumetrische Kälteleistung aus. Eine Verringerung der Verflüssigungstemperatur und eine Erhöhung des Verflüssigungsdrucks bei konstanter Eingangsreinheit des CO₂-haltigen Gasstroms führen zu einer höheren Produktausbeute, da die Volumenanteile von CO₂ im abgeblasenen Gas abnehmen. Die Verwendung von CO₂ als Kältemittel erlaubt es, die Kondensationstemperatur des CO₂ aus dem Gasgemisch bis auf -55°C, bevorzugt - 50°C, abzusenken. Wird die CO₂-Verflüssigung mit CO₂ als Kältemittel im Temperaturbereich -35° bis -55°C., bevorzugt -50° C, durchgeführt, ist es möglich, die CO₂-Ausbeute bei der CO₂-Rückgewinnung bei mäßig steigendem Energie- und Investitionsaufwand im Vergleich zu bisher bekannten Anlagen entscheidend zu erhöhen. Die Verwendung von CO₂ als Kältemittel erlaubt es, den Anteil CO₂ im abgeblasenen Gas unter idealen Bedingungen (20 bar, -50° C) auf 35% zu senken. Dies ist eine deutliche Verringerung gegenüber dem oben beschriebenen Stand der Technik.

Dieser Sachverhalt ist in Tabelle 1 anhand von Beispielen für die Zusammensetzung des abgeblasenen Gasstroms bei unterschiedlichen Systembedingungen dargestellt. Ein geringer Anteil CO₂ im abgeblasenen Gasstrom bedeutet geringe CO₂-Verluste. Die Massenbilanz des Gesamtsystems ist abhängig von der CO₂-Konzentration in dem der Rückgewinnungsanlage zuströmenden Gasstrom und den Systembedingungen im Verflüssiger. Die in dem CO₂-haltigen Gasstrom mitgeführten Fremdgase müssen im Verflüssiger mit möglichst wenig CO₂-Anteil aus dem System abgeblasen werden, um eine technisch und wirtschaftlich sinnvolle Massenbilanz für das System zu erreichen. Die hier beschriebene Erfindung ermöglicht es, unreine CO₂-Gasströme mit hohem Fremdgasanteil wirtschaftlich erschließen zu können.

Das neue Verfahren bietet zudem für die Betriebssicherheit entscheidende Vorteile, da Kältemittel und das gewonnene CO₂ derselbe Stoff sind. Dies bedeutet, dass auch im Falle eines Überströmens des CO₂ in den Kältekreislauf ein Austausch des Kältemittels nicht notwendig wäre. Das Produkt-CO₂ bleibt in einem solchen Fall rein, was besonders für lebensmittelproduzierende Anwender der Technik von entscheidender Bedeutung ist.

**Tabelle 1:**

| Zusammensetzung des abgeblasenen Gases bei unterschiedlichen Systembedingungen im als ideal angenommenen Verflüssiger | | | | |
|---|---|---|---|---|
| | Druck | Temperatur | Volumenanteil CO₂ | Volumenanteil Fremdgase |
| Beispiel 1 | 16 bar | - 30°C | 79,5% | 20,5% |
| Beispiel 2 | 20 bar | - 30°C | 71,5% | 28,5% |
| Beispiel 3 | 20 bar | -50°C | 35% | 65% |

### Beschreibung der Zeichnung

Die Zeichnung zeigt eine schematische Darstellung einer Vorrichtung zur Durchführung des Verfahrens.

Im Folgenden werden die einzelnen Komponenten der Zeichnung erläutert.

### Schaumabscheider und Gasballon

Das durch die Gärprozesse entstehende CO₂ wird durch einen Schaumabscheider geleitet. In diesem wird mitgeschleppter Schaum vom strömenden Gas getrennt. Der Schaum sammelt sich in dem Abscheider und kann mit einer Wasserbesprühung niedergeschlagen und ausgespült werden.

Nach dem Schaumabscheider strömt das CO₂ durch die Gasumschaltestation in einen Ballon, in dem es zwischengespeichert wird. Die Gasumschaltestation leitet das Gas entweder ins Freie oder zur Rückgewinnungsanlage. Bei Störungen oder abgeschalteter Rückgewinnungsanlage wird das CO₂ abgeblasen.

Dem Ballon 1 kommt eine Pufferfunktion zu. Da die entstehende Gasmenge im Normalfall kleiner als die Liefermenge des nachgeschalteten Verdichters ist, werden durch den ausgleichenden Gaspuffer die Schaltvorgänge des Verdichters reduziert. Der Druck im Gasballon 1 wird durch einen Druckaufnehmer überwacht. Innerhalb eines Druckintervalls wird der Verdichter 3 zugeschaltet. Bei Überschreiten eines maximalen Drucks wird Gas über die Gasumschaltestation abgeblasen. Bei Unterdruck werden Gaswascher 2 und Kompressor abgeschaltet.

### Gaswascher und Verdichter

Bevor das CO₂ durch den Verdichter 3 angesaugt wird, durchströmt es den Gaswascher 2. Im Gaswascher 2 sollen wasserlösliche Komponenten aus dem CO₂ entfernt werden. Es gibt über 200 verschiedene wasserlösliche Verunreinigungen, die das CO₂ aus den Gärtanks enthält. Die wichtigsten sind Ethanol, DMS, H₂S und flüchtige Hopfenöle.

Das Gas durchströmt den Gaswascher 2 dem Wasserstrom entgegengesetzt von unten nach oben. Der Gaswascher 2 kann mit oder ohne Füllkörperschicht ausgeführt sein. Das verunreinigte Wasser wird kontinuierlich abgeschlämmt und durch Frischwasser ersetzt.

Dem Gaswascher 2 ist ein Demiesterrohr nachgeschaltet. Das Demiesterrohr trennt das mitgerissene Wasser vom Gasstrom und leitet es in den Gaswascher 2 zurück. Das CO₂ nach Gaswascher 2 und Demiesterrohr ist 100 % mit Wasser gesättigt. In diesem Zustand wird es bei geringem Druck und geringer Temperatur durch den Verdichter 3 angesaugt.

Um CO₂ in größeren Mengen stapeln zu können, muss es in den flüssigen Aggregatzustand überführt werden. CO₂ lässt sich bei einem Druck von 16 - 20 bar wirtschaftlich verflüssigen. Die Kompression wird mit Hilfe von 2- bis 3-stufigen Verdichtern realisiert. Möglich sind auch 1-stufige Verdichter. Üblich ist der Einsatz von trockenlaufenden Hubkolbenverdichtern. Auch Schraubenverdichter oder jeder andere Typ von Verdichter 3 sind möglich. Jeder Verdichterstufe ist bevorzugterweise ein wassergekühlter Zwischenkühler und ein Kondensatabscheider nachgestaltet.

### Reinigung des CO₂

Im Anschluss an den Verdichtungsprozess wird das CO₂ über einen Vorfilter, in dem Wassertröpfchen abgetrennt werden, durch einen Trockner 4 geleitet. Hier muss dem Gas das Wasser entzogen werden, um Eisbildung bei der Verflüssigung zu vermeiden.

Es stehen zwei Adsorptionsfilter (Füllmaterial: Kieselgel oder Zeolithe) zur Verfügung, die im Wechselbetrieb regeneriert werden. Das aus dem Trockner 4 strömende Gas wird durch eine Messsonde überwacht, die bei Überschreiten des Drucktaupunktes von -50°C auf den anderen Trockner 4 umschaltet.

In den nachgeschalteten Aktivkohlefiltern 5 werden dem die wasserunlöslichen Geruchsstoffe bzw. solche, die den Gaswascher 2 passiert haben entzogen. Hier ist wichtig, dass dem CO₂ die wasserlöslichen Geruchsstoffen soweit als möglich entzogen wurden, da sie den Kohlefilter sonst unnötig belasten. Die zwei Aktivkohlefilter werden im Wechselbetrieb betrieben und regeneriert.

Sowohl die Trockner 4 als auch die Aktivkohlefilter werden mit CO₂ regeneriert. Dies ist zwar energetisch ungünstig, folgt aber aus der technologischen Vorgabe, dass das CO₂ und damit die CO₂-Rückgewinnungsanlage sauerstofffrei gehalten werden müssen.

Im Regenerationszyklus wird zunächst erhitztes CO₂ im Gegenstrom durch den Trockner 4 geleitet, um die Feuchtigkeit aus dem Trocknungsmittel zu entfernen. Anschließend wird der Behälter wieder mit kaltem Spülgas gekühlt.

### Verflüssiger und Lagertank

In dem Verflüssiger 6 wird das CO₂ verflüssigt, um ein möglichst geringes Lagervolumen zu erreichen. Der CO₂-Verflüssiger 6 ist ein Wärmetauscher, in dem das Kältemittel verdampft und das Produkt-CO₂ bei Systemdruck verflüssigt wird.

Neben der Volumenreduzierung erfüllt der Verflüssiger 6 eine zweite wichtige Aufgabe. Es werden die nicht kondensierbaren Gase, vor allem O₂ und N₂ weitgehend abgetrennt. Diese Gase reichern sich im Dom des Verflüssigers an, da sie relativ zu CO₂ eine geringere Dichte haben. Die sich im Dom sammelnden Fremdgase müssen über ein Ventil abgeblasen werden.

Auf diese Weise wird sowohl eine erhöhte Sauerstoffkonzentration im flüssigen CO₂ vermieden, als auch der Erhalt der Verflüssigungsfunktion gewährleistet. Die Fremdgase im Verflüssiger 6 bewirken zwei nachteilige Effekte. Ohne Abblasen würde durch das zunehmende Volumen der nicht kondensierbaren Gase das CO₂ von den Wärmetauscherflächen des Verflüssigers verdrängen und den Wärmeübergang behindern. Weiterhin würden die sich aufgrund der steigenden Partialdrücke vermehrt im CO₂ lösenden Fremdgase die Verflüssigungstemperatur des CO₂ absenken. Deshalb werden die Fremdgase in einem einstellbaren Intervall abgeblasen.

Da diese Gase den gesamten Prozess mit durchlaufen, ist es aus energietechnischer Sicht erstrebenswert, ihren Anteil von vornherein gering zu halten.

Nach der Verflüssigung wird das CO₂ in isolierten Lagertanks 7 gestapelt und bei Bedarf über einen Verdampfer in ein Leitungsnetz eingespeist.

## Patentansprüche

1. Verfahren zur Rückgewinnung von CO₂ aus wenigstens einem Gasstrom, das wenigstens die folgenden Schritte umfasst:
a) Kompression des Gasstroms und
b) Verflüssigung des Produkt-CO₂ durch Kühlung und Kondensation des Gasstroms unter Einsatz von CO₂ als Kältemittel
**dadurch gekennzeichnet, dass**
das Kältemittel im Schritt b) in einem geschlossenen Kältemittelkreislauf verwendet wird.

2. Verfahren nach Anspruch 1, **gekennzeichnet durch,** die Entfernung von leicht flüchtigen Begleitstoffen und Wasserdampf aus dem Gasstrom **durch** Filtration, bevorzugt nach der Kompression und bevorzugt vor der Verflüssigung des Produkt-CO₂.

3. Verfahren nach Anspruch 1 oder 2, **gekennzeichnet, durch** Abblasen der nicht kondensierten Gase.

4. Verfahren nach einem der Ansprüche 1 bis 3, **gekennzeichnet durch** Kondesationstemperaturen bei der Verflüssigung unterhalb von einer oberen Grenze von -20°C, bevorzugt von -30°C, und bevorzugter von -35°C und noch bevorzugter von -40°C und darüberhinaus noch bevorzugter von -50°C sowie oberhalb von einer unteren Grenze von -55°C, bevorzugt -50°C, wobei die untere Grenze niedriger ist als die obere Grenze.

5. Verfahren nach einem der Ansprüche 1 bis 4, **gekennzeichnet durch** Kondensationsdrücke auf der Produktseite zwischen 7 bar und 30 bar, bevorzugt zwischen 7 bar und 20 bar und bevorzugter zwischen 15 und 20 bar und noch bevorzugter zwischen 19 und 20 bar.

6. Verfahren nach einem der Ansprüche 1 bis 5, **dadurch gekennzeichnet, dass** der Gasstrom einen CO₂-Volumenanteil zwischen 70% und 100% enthält.

7. Verfahren nach einem der Ansprüche 1 bis 6, **dadurch gekennzeichnet, dass** bei hohen Systemdrücken und niedrigen Kondensationstemperaturen die Massenbilanz an einem Kondensator bzw. Verflüssiger (6) durch einen hohen Anteil an flüssigem CO₂ und wenig aus der Anlage abgeblasenem CO₂ **gekennzeichnet** ist.

8. Verfahren nach einem der Ansprüche 1 bis 7, **dadurch gekennzeichnet, dass** die Druckdifferenz zwischen Produkt-CO₂ und Kältemittel-CO₂ weniger als 1 bar beträgt, wobei dies bevorzugt bei geringem Fremdgasanteil im zuströmenden Gasstrom gilt.

9. Verfahren nach einem der Ansprüche 1 bis 8, **dadurch gekennzeichnet, dass** bei einer Leckage im Kondensator bzw. Verflüssiger (6) gemäß einem Druckgefälle Produkt-CO₂ in das Kältemittel-CO₂ überströmt.

10. Verfahren nach einem der Ansprüche 1 bis 9, **dadurch gekennzeichnet, dass** der Gasstrom mit CO₂-Volumenanteil aus Fermentationsprozessen, Abgasen von Energiewandelprozessen, chemischen Prozessen oder natürlichen Quellen stammt, wobei der CO₂-Volumenanteil bevorzugt hoch ist.

## Claims

1. Process for recovering CO₂ from at least one gas stream, which comprises at least the following steps:
a) compression of the gas stream, and
b) liquefaction of the product CO₂ by cooling and condensation of the gas stream using CO₂ as refrigerant,
**characterized in that**
the refrigerant in step b) is used in a closed refrigerant cycle.

2. Process according to Claim 1, **characterized by** the removal of highly volatile accompanying substances and water vapour from the gas stream by filtration, preferably after the compression and preferably before the liquefaction of the product CO₂.

3. Process according to Claim 1 or 2, **characterized by** the uncondensed gases being blown off.

4. Process according to one of Claims 1 to 3, **characterized by** condensation temperatures during liquefaction below an upper limit of -20°C, preferably of -30°C and more preferably of -35°C, even more preferably of -40°C, and more preferably still of -50°C and above a lower limit of -55°C, preferably -50°C, with the lower limit being lower than the upper limit.

5. Process according to one of Claims 1 to 4, **characterized by** condensation pressures on the product side of between 7 bar and 30 bar, preferably between 7 bar and 20 bar, and more preferably between 15 and 20 bar, even more preferably between 19 and 20 bar.

6. Process according to one of Claims 1 to 5, **characterized in that** the gas stream contains between 70% and 100% by volume of CO₂.

7. Process according to one of Claims 1 to 6, **characterized in that** at high system pressures and low condensation temperatures, the mass balance at a condenser or liquefier (6) is **characterized by** a high level of liquid CO₂ and little CO₂ blown off from the installation.

8. Process according to one of Claims 1 to 7, **characterized in that** the pressure difference between product CO₂ and refrigerant CO₂ is less than 1 bar, and this preferably applies with a low level of foreign gas in the incoming gas stream.

9. Process according to one of Claims 1 to 8, **characterized in that** in the event of a leak in the condenser or liquefier (6), product CO₂ overflows into the refrigerant CO₂ in accordance with a pressure gradient.

10. Process according to one of Claims 1 to 9, **characterized in that** the gas stream containing the CO₂ volume fraction originates from fermentation processes, from off-gases from energy conversion processes, chemical processes or natural sources, with the CO₂ preferably forming a high proportion by volume.

## Revendications

1. Procédé de récupération de CO₂ à partir d'au moins un flux de gaz, qui comprend au moins les étapes suivantes :
a) compression du flux de gaz et
b) liquéfaction du CO₂-produit par refroidissement et condensation du flux de gaz en utilisant du CO₂ en tant qu'agent réfrigérant,
**caractérisé en ce que** l'agent réfrigérant est utilisé dans l'étape b) dans un circuit fermé d'agent réfrigérant.

2. Procédé suivant la revendication 1, **caractérisé par** l'élimination d'impuretés facilement volatiles et de vapeur d'eau du flux de gaz par filtration, de préférence après la compression et de préférence avant la liquéfaction du CO₂-produit.

3. Procédé suivant l'une des revendications 1 et 2, **caractérisé par** la décharge des gaz non condensés.

4. Procédé suivant l'une des revendications 1 à 3, **caractérisé par** des températures de condensation lors de la liquéfaction au-dessous d'une limite supérieure de -20°C, de préférence de -30°C, et plus préférentiellement de - 35°C et encore plus préférentiellement de -40°C et de surcroît encore plus préférentiellement de -50°C, ainsi qu'au-dessus d'une limite inférieure de -55°C, de préférence de -50°C, la limite inférieure étant plus basse que la limite supérieure.

5. Procédé suivant l'une des revendications 1 à 4, **caractérisé par** des pressions de condensation du côté produit entre 7 bars et 30 bars, de préférence entre 7 bars et 20 bars et plus préférentiellement entre 15 et 20 bars et encore plus préférentiellement entre 19 et 20 bars.

6. Procédé suivant l'une des revendications 1 à 5, **caractérisé en ce que** le flux de gaz comporte une fraction volumique de CO₂ entre 70% et 100%.

7. Procédé suivant l'une des revendications 1 à 6, **caractérisé en ce que**, pour des pressions de système élevées et de basses températures de condensation, le bilan massique à un condenseur ou liquéfacteur (6) est **caractérisé par** une fraction élevée de CO₂ liquide et peu de CO₂ déchargé hors de l'installation.

8. Procédé suivant l'une des revendications 1 à 7, **caractérisé en ce que** la différence de pression entre le CO₂-produit et le CO₂-agent réfrigérant est de moins d'l bar, cela valant de préférence pour une faible fraction de gaz étrangers dans le flux de gaz affluant.

9. Procédé suivant l'une des revendications 1 à 8, **caractérisé en ce que** du CO₂-produit passe dans le CO₂-agent réfrigérant en cas de fuite dans le condenseur ou liquéfacteur (6) selon une chute de pression.

10. Procédé suivant l'une des revendications 1 à 9, **caractérisé en ce que** le flux de gaz avec une fraction volumique de CO₂ provient de processus de fermentation, de gaz d'échappement de processus de conversion d'énergie, de processus chimiques ou de sources naturelles, la fraction volumique de CO₂ étant de préférence élevée.
